# NEUE EUROPÄISCHE PATENTSCHRIFT

(11) **EP 1 268 703 B2**
(45) Veröffentlichungstag und Bekanntmachung des Hinweises auf die Entscheidung über den Einspruch: **02.01.2008**
(45) Hinweis auf die Patenterteilung: 12.05.2004
(21) Anmeldenummer: 01936107.0
(22) Anmeldetag: 20.03.2001
(51) Int. Cl.: C09J 201/02, C09J 115/00, C09J 119/00, C09J 123/26, C08J 3/12, C09J 9/00

(54) **REAKTIVES SCHMELZKLEBSTOFF-GRANULAT FÜR ISOLIERGLAS**
REACTIVE HOT-MELT-TYPE ADHESIVE GRANULATE FOR INSULATING GLASS
GRANULATS ADHESIFS THERMOFUSIBLES REACTIFS POUR VERRE D'ISOLATION

(30) Priorität: 28.03.2000 DE 10015290
(43) Veröffentlichungstag der Anmeldung: 02.01.2003
(73) Patentinhaber: H.B. FULLER LICENSING & FINANCING, INC., St. Paul, MN 55164 (US)
(72) Erfinder: GRIMM, Stefan, 68723 Schwetzingen (DE); PRÖBSTER, Manfred, 69226 Nussloch (DE); KOHL, Mathias, 69514 Laudenbach (DE); FERENCZ, Andreas, 40223 Düsseldorf (DE)
(74) Vertreter: Winkler, Andreas Fritz Ernst
(86) Internationale Anmeldenummer: PCT/EP2001/003164
(87) Internationale Veröffentlichungsnummer: WO 2001/072922

(56) Entgegenhaltungen:
- EP-A- 0 312 967
- EP-A- 0 491 561
- WO-A-00/47687
- WO-A-97/48778
- DE-A- 19 516 457
- DE-A- 19 821 356

## Beschreibung

Die vorliegende Erfindung betrifft ein reaktives Gemenge aus thermoplastischen Polymerteilchen sowie ein Verfahren zur Herstellung von 2- oder Mehrscheiben-Isolierglas.

2- oder Mehrscheiben-Isolierglas-Verbundsysteme bestehen aus 2 oder mehr parallel angeordneten Glasscheiben, die in ihrem Randbereich so verbunden sind, daß der durch die Scheiben eingeschlossene Zwischenraum so gegen die Umgebungsluft abgedichtet ist, daß keine Feuchtigkeit in diesen Zwischenraum eindringen kann. Weiterhin ist der Randverbund so ausgebildet, daß er allen durch wechselnde Klimabelastungen entstehenden mechanischen und chemischen Beanspruchungen standhält. In vielen Fällen ist dieser Zwischenraum noch mit trockenen Gasen gefüllt, die eine Erhöhung der Wärmedämmung bzw. Erhöhung der Schalldämmung gegenüber normaler Luftfüllung bewirken. Derartige Isoliergläser werden überwiegend im Bauwesen, aber auch im Fahrzeugbau eingesetzt.

Der Randverbund dieser Isoliergläser kann auf verschiedene Arten hergestellt werden. In der auch heute noch häufigsten Ausführungform dient ein Aluminium- oder Stahlblechhohlprofil als Abstandshalter für den gewünschten Abstand zwischen den Glasscheiben. Er ist in der Nähe der Ränder der Glasscheiben so angeordnet, daß der Abstandshalter zusammen mit den Randbereichen der Glasscheiben eine nach außen weisende Rinne zur Aufnahme von Dicht- und Klebstoffen bilden. Diese Dicht- und Klebstoffe bewirken einen ausreichenden Festigkeitsverbund der Isolierglasanordnung. Bei hochwertigen Isolierglassystemen des heutigen Standards befindet sich zwischen den den Glasscheiben zugewandten Flächen des Abstandshalters und der Glasoberfläche noch ein Dichtstoff mit hoher Wasserdampfsperrwirkung. Hierfür kommen in der Regel thermoplastische Formulierungen auf der Basis von Polyisobutylen und/oder Butylkautschuk zur Anwendung. Die Herstellung derartiger Isolierglasanordnungen besteht aus einer Reihe von komplexen Arbeitsabläufen und ist trotz hohen Automatisierungsgrades bei großen Fertigungsstraßen immer noch sehr kostenintensiv. Es gibt daher eine Reihe von Versuchen, diese komplexen Arbeitsabläufe zur Herstellung von Isoliergläsern zu vereinfachen, wobei man insbesondere bemüht ist, ohne vorprofilierte Abstandshalter auszukommen.

Bei dem sogenannten "System Biver" extrudiert man beispielsweise einen thermoplastischen Strang, der vorzugsweise auf der Basis von Polyisobutylen bzw. Butylkautschuk aufgebaut ist und der ein Molekularsieb zur Adsorption von Feuchtigkeit enthalten kann, zunächst auf eine Scheibe in deren Randbereich. Anschließend wird die zweite Scheibe darüber positioniert und die beiden Scheiben werden anschließend miteinander auf den vorbestimmten Abstand verpresst. Danach wird der äußere Randbereich durch einen in der Regel 2-komponentigen Kleb-/Dichtstoff versiegelt. Dieses System ist in zahlreichen Patenten/Anmeldungen beschrieben, beispielsweise in der DE-C-2555381, DE-A-2555383, DE-A-2555384 sowie der EP-A-176388 oder der EP-A-714964.

Um eine kraftschlüssige Verkoppelung der Scheiben und eine Ausbildung eines formstabilen, selbsttragenden Plattenkörpers zu bewirken, schlägt die WO 94/16187 die Verwendung von Formkörpem aus textilem Abstandsgewebe als Abstandshalter zwischen den Glasscheiben vor. Das textile Abstandsgewebe enthält hochelastische und biegesteife Stegfäden und ist zur Ausbildung des Randverbundes mit einem Harz als Bindemittel getränkt. Dazu wird der Randbereich einer Scheibe mit dem harzgetränkten textilen Abstandsgewebe bedeckt. Anschließend wird die zweite Scheibe passgenau über die erste Scheibe gelegt und die beiden Scheiben verpresst um die Scheiben im Randbereich zu verbinden. Nach dem Öffnen der Presse kann das reaktive Bindemittelsystem aushärten.

Die WO 97/31769 beschreibt ein vorgeformtes flexibles Laminat zur Ausbildung des Randverbundes von Isolierglasscheiben. Dieses flexible Laminat enthält, ganz oder teilweise in seinem Kernmaterial eingebettet, ein wellenförmig geformtes Flächengebilde als Abstandshalter, dessen flächige Ausdehnung senkrecht zu den Glasscheiben angeordnet ist. Das Laminat hat eine polymere Beschichtung auf mindestens einer Oberfläche, die den Innenraum der Scheibenanordnung von Luft und/oder Feuchtigkeit abdichtet und den gewünschten Abstand zwischen den Glasscheiben aufrecht erhält. Zur Herstellung derartiger Laminate ist ein mehrstufiger Coextrusionsprozess notwendig, der zunächst das wellenförmige Flächengebilde in einem Kemmaterial einbettet, das dann auf seinen Außenflächen mit einem oder mehreren polymeren Materialien beschichtet werden muss.

Gemäß EP-A-81656 werden Zweischeiben-Isoliergläser derart hergestellt, daß zunächst die Randzonen der zu verbindenden Glasscheiben mit einer Lösung eines Primers bzw. Klebstoffes beschichtet werden. Anschließend werden die Glasscheiben in den vorbestimmten Abstand gebracht und in den Randbereich wird eine thermoplastische Harzzusammensetzung aus einem Butylkautschuk und einem kristallinen Polyolefin extrudiert, wobei diese thermoplastische Zusammensetzung noch Klebrigmacher und Trockenmittel enthalten kann.

Nachteilig bei allen vorgenannten Randverbundsystemen auf der Basis von thermoplatischen Polymeren ist deren geringe Wärmestandfestigkeit und Dauertemperaturbeständigkeit. Diese Nachteile lassen sich nur dadurch beseitigen, daß man reaktive Systeme vom Typ des reaktiven Schmelzklebstoffes einsetzt, die entweder thermisch nachvemetzten oder durch Feuchtigkeit bzw. Sauerstoff nachvemetzten, so daß eine vemetzte Polymermatrix im Randverbund des Isolierglassystemes für ausreichende thermische Beständigkeit sorgt. So beschreibt die WO 97/15619 Dicht-/Klebstoffe zur Herstellung von Isolierglaseinheiten auf der Basis von einkomponentigen, heißapplizierten, chemisch vemetzenden Kleb-Dichtstoffen. Dabei enthalten diese Bindemittelsysteme ein thermoplastisches Schmelzklebstoffharz, das mit einem Harz vermischt ist, das mit atmosphärischem Sauerstoff und/oder Feuchtigkeit vernetzungsfähig ist. Dabei dient das Schmelzklebstoff-Harz als schmelzbare Komponente während der ursprünglichen Applikation und bewirkt eine Anfangsfestigkeit unmittelbar nach dem Abkühlen. Anschließend beginnt die vernetzungsfähige Polymerphase mit dem Sauerstoff der Luft bzw. der Feuchtigkeit der Luft unter Vernetzung zu reagieren. Als vemetzungsfähige Harze werden feuchtigkeitsreaktive Polyurethane, feuchtigkeitsreaktive Polysulfide, Polydimethylsiloxane oder sauerstoffhärtende Polysulfide vorgeschlagen.

In der Schrift DE-A-19821356 wird ein Verfahren zur Herstellung eines silanmodifizierten Butylkautschukes beschrieben. Danach wird ein Butylkautschuk mit einem mercaptogruppen-haltigen Silan umgesetzt, welches Hydroxygruppen oder hydrolysierbare Gruppen enthält. Diese Umsetzung erfolgt mit Hilfe eines Radikalbildners. Gemäß der Lehre dieser Schrift können derartige Polymere mit weiteren Zuschlagstoffen in einem Kneter gemischt werden und zu einer zweikomponentigen Masse verarbeitet werden und mittels einer geeigneten Maschine auf Glas aufgetragen werden. Diese aufgetragene Masse dient dann gleichzeitig als Abstandhalter für die beiden Gläser, sie enthält das Trockenmittel für das Scheibenvolumen und dient als Wasserdampf- und Gasbarriere und als elastische Verklebung.

Die WO 97/48778 beschreibt eine Schmelzklebstoff-Zusammensetzung enthaltend eine Mischung aus mindestens einem reaktiven Bindemittel auf der Basis von Silan-funktionellen Polyisobutylenen, hydriertem Polybutadien und /oder Poly-α-olefinen und einem nichtreaktiven Bindemittel aus der Gruppe der Butylkautschuke, Poly-α-olefine, Polybutene, Styrol-block Copolymere oder Dienpolymere. Diese können als 1- oder 2-Komponenten Kleb-/Dichtstoff zur Herstellung von Isoliergläsern verwendet werden. Es werden dabei keine separaten Abstandshalter aus Metall- oder Kunststoffprofilen benötigt.

Neben einigen verarbeitungstechnischen Vorteilen weisen die oben genannten verschiedenen Systeme einige Nachteile auf: beim System Biver werden ein thermoplastischer Abstandshalter (Thermoplastic Spacer, TPS) sowie ein konventioneller, meist 2-komponentiger, Klebstoff auf der Basis von Polysulfid, Silikon oder Polyurethan benötigt. Bei den reaktiven Schmelzklebstoffen wird zwar in der Regel nur ein Material benötigt, beide vorgenannten Bindemittel-Systeme werden jedoch in Fässern angeliefert aus denen das Material, ggf. nach Erwärmen, durch Pumpen an den Applikationsort gefördert wird. Bei der Verarbeitung können Probleme entstehen, wenn bei hoher Materialabrufmenge pro Zeiteinheit die aufgeschmolzene Menge im Materialspeicher des Applikators sowie die Aufschmelzrate pro Zeiteinheit nicht ausreicht, um den notwendigen Materialfluss zu gewährleisten. Zusätzlich treten bei den reaktiven einkomponentigen warm- oder heißschmelzbaren Systemen die dem Fachmann bekannten Probleme wie Schwierigkeiten bei der Abfüllung, mangelnde Lagerstabilität und geringe Durchhärtegeschwindigkeit sowie bei der Entsorgung/Reinigung der Klebstoff-kontaminierten gebrauchten Gebinde auf.

Ausgehend von diesem Stand der Technik liegt dieser Erfindung die Aufgabe zugrunde, ein Bindemittelsystem zur Verfügung zu stellen, das nach der Art der reaktiven Schmelzklebstoffe applizierbar ist, das jedoch eine gegenüber dem Stand der Technik verbesserte Lagerung, Förderung und Transportmöglichkeit ermöglicht. Insbesondere soll das Bindemittelsystem auch nach langer Lagerung und bei wechselnden Temperaturen gut zu handhaben sein und insbesondere leicht zu dosieren sein. Dazu gehört weiterhin die Vermeidung der Kontamination der Transportgebinde, es soll fernerhin ein schnelles Aufschmelzen und Durchmischen der reaktiven Komponenten möglich sein. Natürlich dürfen sowohl die klebetechnischen Eigenschaften als auch die Wasserdampf- und Gasdiffusions-Sperrwirkung nicht nachteilig beeinflusst werden.

Die Lösung ist den Patentansprüchen zu entnehmen. Sie besteht im Wesentlichen in der Bereitstellung eines reaktiven Gemenges aus thermoplastischen Polymerteilchen auf der Basis von Butylkautschuk, Poly-α-olefinen, elastomeren Blockcopolymeren und/oder Polyisobutylenen wobei
a) ein Anteil dieser Gemengeteilchen Polymere mit reaktiven Gruppen ausgewählt aus Hydroxylgruppen, Aminogruppen, Carboxylgruppen, Carbonsäureanhydridgruppen und/oder Mercaptogruppen enthält und
b) ein weiterer Anteil der Gemengeteilchen Polymere mit reaktiven Gruppen ausgewählt aus Isocyanatgruppen, Epoxidgruppen und/oder aktive olefinisch ungesättigte Doppelbindungen enthält sowie
c) ggf. ein weiterer Anteil der Gemengeteilchen nicht mit den funktionellen Gruppen der a) und b) Teilchen reagierende Hilfs- und Zusatzstoffe enthalten.

Zu den elastomeren Blockcopolymeren im Sinne dieser Erfindung zählen insbesondere die Di- und Triblockcopolymeren des Styrols mit Butadien oder Isopren sowie deren Hydrierungsprodukte, z.B. Styrol-Butadien-Styrol (SBS), Styrol-Isopren-Styrol (SIS), Styrol-Ethylen-Butylen-Styrol (SEBS), Styrol-Ethylen-Propylen-Styrol (SEPS).

Ein weiterer Gegenstand der vorliegenden Erfindung ist ein Verfahren zum Verbinden von flächigen Gebilden, insbesondere Isoliergläsern, das die folgenden wesentlichen Verfahrensschritte beinhaltet
a) Homogenisieren und Aufschmelzen des vorgenannten reaktiven Gemenges, ggf. in einer inerten Atmosphäre unter Ausschluß von Feuchtigkeit und/oder Sauerstoff, wobei ein Mischaggregat mit hoher Scherung verwendet wird, das ggf. heizbar ist
b) Extrusion des homogenisierten reaktiven thermoplastischen Gemisches ggf. durch eine formgebende Düse auf mindestens einen Randbereich eines Flächengebildes
c) Anschließendes Fügen eines zweiten dazu passenden Flächengebildes auf die aufgebrachte Schicht des reaktiven Gemisches
d) Ggf. mechanisches Fixieren und/oder Verpressen der gefügten Flächengebilde
e) Abkühlen des so gebildeten Verbundsystemes von Flächengebilden auf Raumtemperatur, wobei das reaktive Gemisch unter Vernetzung aushärtet.

Ein weiterer Gegenstand der vorliegenden Erfindung ist die Herstellung von 2- oder Mehrscheiben-Isoliergläsern, Gießharzscheiben, Solarkollektoren oder Fassadenelementen für Bauwerke nach dem vorgenannten Verfahren.

Gemengeteilchen im Sinne dieser Erfindung sind dabei polymerhaltige Gemische, die bei Raumtemperatur im Wesentlichen ihre Formgestalt beibehalten. Als Raumtemperatur ist hier eine übliche Lagertemperatur zwischen 0°C und etwa 30°C zu verstehen. Es handelt sich hierbei um Granulate mit mittleren Teilchengrößen zwischen 0,5 und 40 mm, vorzugsweise zwischen 1 und 30 mm Durchmesser und ganz besonders bevorzugt sind Teilchengrößenbereiche zwischen 2 und 20 mm Teilchendurchmesser. Dabei können die Teilchen im Prinzip jede beliebige Raumform haben. Diese Raumform richtet sich im Wesentlichen nach dem Herstellprozess des Granulates. In einer besonders bevorzugten Ausführungsform werden die Granulatteilchen durch Extrusion durch eine Lochscheiben-Düse hergestellt und die so extrudierten Stränge auf das gewünschte Längenmass geschnitten. Das Granulatkom kann dabei sowohl eine kugelartige Form haben als auch scheibenförmig, würfelförmig, elliptisch oder zylindrisch sein.

Die Granulatteilchen enthalten dabei neben den Reaktivkomponenten gemäß a) bzw. b) noch Polyisobutylen, Poly-α-olefine, elastomere Blockcopolymere, Wachse sowie Füllstoffe, Farbpigmente, ggf. wasserbindende Mittel in Form von Molekularsieben (Trockenmittel). Weiterhin können die Granulatteilchen, insbesondere der Komponente c) noch Hilfs- und Zusatzstoffe wie Katalysatoren, Rheologiehilsmittel, Alterungsschutzmittel, sowie ebenfalls Trockenmittel, Farbstoffe und Pigmente enthalten.

Durch den Gehalt an Poly-α-olefinen und insbesondere an Polyisobutylen sowie zum Teil auch durch den Gehalt der Reaktivbestandteile haben diese Granulate direkt nach dem Austritt aus dem Extruder oder Granulator eine klebrige Oberfläche, die ein Zusammenbacken der Granulatteilchen bei längerer Lagerung verursachen würde. In aller Regel werden diese Granulate daher unmittelbar nach der Granulierung mit einem geeigneten Trennmittel oberflächlich beschichtet. Dieses Trennmittel kann beispielsweise aus einem Gemisch aus Talkum, pyrogener Kieselsäure und Molekularsiebpulver bestehen. Es können jedoch auch andere pulverförmige Trennmittel zur oberflächlichen Beschichtung verwendet werden. Hierzu zählen z.B. Ruß, hochdisperse Kieselsäuren ohne die anderen vorgenannten Bestandteile, Polyethylenpulver, Ethylenvinylacetatpulver oder andere feinteilige Polymerpulver. Ebenso können auch bei leicht erhöhter Temperatur aufschmelzbare Trennmittel wie z.B. Wachse auf die Granulatoberfläche aufgesprüht werden. Beispiele für derartige Wachse sind Polyolefin-Wachse, insbesondere Polyethylen-Wachs oder auch Fischer-Tropsch-Wachs. Wesentliches Auswahlkriterium ist dabei, daß die Teilchenoberfläche bei Raumtemperatur und Lagerungstemperatur nicht klebrig ist. Die Trennmittelschicht soll aber bei der Weiterverarbeitung beim Endanwender ohne Unverträglichkeiten in das Bindemittelsystem einmischbar sein. Dabei soll diese äußere nicht klebrige Schicht den Kern des Granulats so vollständig umgeben, daß von einer kontinuierlichen oberflächlichen Schicht gesprochen werden kann, daß heißt es sind in der Regel mehr als 90%, insbesondere mehr als 99% der Granulatoberfläche beschichtet. Dadurch ist das Granulat rieselfähig. Dies bedeutet, das es aufgrund seines Eigengewichtes auch nach längerer Lagerung bei Temperaturen bis zu 30 oder 40°C noch durch eine Öffnung frei rieselt und somit problemlos gefördert werden kann.

Typischerweise sind die nicht reaktiven Bestandteile der Granulat-Gemenge-Teilchen in folgenden Mengen vorhanden:
Poly-α-olefine und/oder elastomere Blockcopolymere 5 bis 30 Gew.%,
Polyisobutylen 20 bis 50 Gew.%,
Wachs 0 bis 10 Gew.%, vorzugsweise 0,5 bis 5 Gew.%
Füllstoffe 10 bis 30 Gew.%,
Ruß 5 bis 30 Gew.%, vorzugsweise 5 bis 20 Gew.%,
Molekularsieb 10 bis 20 Gew.%,
ggf. Katalysatoren, Rheologiehilfsmittel, Alterungsschutzmittel 0,5 bis 8 Gew.%,
reaktives Polymer 2 bis 30 Gew.%, vorzugsweise 5 bis 20 Gew.%.

Die nicht reaktiven Bindemittel werden also im wesentlichen gebildet aus der Gruppe der Poly-α-olefine, Kautschuke auf der Basis von Styrol-Blockcopolymeren mit Dienen wie z.B. Butadien oder Isopren, wobei diese Blockcopolymere ganz oder teilweise hydriert sein können, weiterhin können Kautschuke auf der Basis von statistischen Dien-Homo- und/oder Copolymeren eingesetzt werden. Ein weiterer wesentlicher Bestandteil sind Butylkautschuke in Form von Polybutenen oder Polyisobutylenen. Aus der Gruppe der Poly-α-olefine seien beispielhaft die Ethylen-Propylen-Elastomeren genannt, wie z.B. Ethylen-Propylen-Copolymere, sowie Terpolymere des Ethylens und Propylens mit einem nicht konjugierten Dien (EPDM) oder Propen-Buten-Copolymere sowie Ethylenvinylacetat.

Bei den Kautschuken auf Basis von Styrol-Blockcopolymeren handelt es sich hauptsächlich um Di- bzw. Triblockcopolymeren aus Styrol mit einem Dien wie z.B. Butadien oder Isopren, wie sie z.B. unter dem Handelsnamen "Kraton" von der Firma Shell erhältlich sind. Wie bereits zuvor erwähnt, können diese Blockcopolymeren auch in ihrer hydrierten oder teilweise hydrierten Form eingesetzt werden.

Beispiele für die statistischen Dien-Homo- und Copolymeren sind Polybutadien, Polyisopren, deren Copolymere sowie statistische Styrol-Butadien Copolymere (SBR), Acrylnitril-Butadien-Copolymere (NBR) sowie die partiell hydrierten oder vollständig hydrierten Dienpolymeren der letztgenannten Gruppe.

Wegen ihrer bekanntermaßen besonders guten Wasserdampf- bzw. Gassperrwirkung sind die Polybutene und/oder Polyisobuten, d.h. die durch stereospezifische Polymerisation von 1-Buten oder Isobuten hergestellten Polyolefine sowie die Butylkautschuke, daß heißt Copolymere von Isobutylen mit Isopren ein besonders bevorzugter wesentlicher Bestandteil der Granulatteilchen.

Die erfindungsgemäßen reaktiven thermoplastischen Polymergranulat-Teilchen erhalten weiterhin an sich bekannte Bestandteile, hierzu gehören insbesondere wasserbindende Füllstoffe, vorzugsweise die als Molekularsieb bekannten Zeolithe vom 3 A-Typ oder Calciumoxid in Pulverform. Weiterhin können feinteilige inerte Füllstoffe wie z.B. gemahlene oder gefällte Kreiden, Kaoline, Tone und Ruße eingesetzt werden. Die Kreiden, Kaoline oder Tone können dabei sowohl in ihrer oberflächlich hydrophobisierten Form oder auch ohne Oberflächenvorbehandlung eingesetzt werden.

Weiterhin können zumindest ein Teil der thermoplastischen Granulat-Polymerteilchen organofunktionelle Silane als Haftvermittler und/oder Vernetzer enthalten, hierzu gehören beispielsweise das 3-Glycidoxy-Propyltrialkoxysilan, 3-Acryloxypropyltrialkoxysilan, 3-Aminopropyltrialkoxysilan, Vinyltrialkoxysilan, N-Aminoethyl-3-Aminopropyl-dialkoxysilan, Vinylaminopropyltrialkoxysilan oder Aminoalkyltrialkoxysilan. Als Alkoxygruppe sind dabei die Methoxy- bzw. Ethoxygruppen besonders bevorzugt.

Die Auswahl der eventuell mit zu verwendenden Alterungsschutzmittel richtet sich dabei nach der Zusammensetzung der Bindemittel, es können hier Antioxydantien von Typ der sterisch gehinderten Phenole, Thioether oder hochmolekularen Mercaptoverbindungen eingesetzt werden, UV-Schutzmittel vom Typ der bekannten Benzotriazole, Benzophenone oder vom Typ des HALS (Hindered Amine Light Stabilizer). Es kann sich als zweckmäßig erweisen, bekannte Ozonschutzmittel zuzusetzen, in Ausnahmefällen kann auch der Zusatz von Hydrolyseschutzmitteln notwendig werden.

Die reaktiven Bestandteile der thermoplastischen Granulat-Teilchen sind dabei Polymere oder Oligomere mit reaktiven Gruppen. Dabei können die Polymere der Gruppe a) und b) ausgewählt werden aus Polymeren, die im Mittel mehr als eine funktionelle Gruppe, vorzugsweise 2 bis 2,5 Gruppen tragen. Dabei können diese reaktiven Gruppen für die Polymeren der Gruppen a) ausgewählt werden aus Hydroxylgruppen, Aminogruppen, Carboxylgruppen, Carbonsäureanhydridgruppen und/oder Mercaptogruppen.

Die reaktiven Gruppen der Polymeren der Gruppe b) sollen naturgemäß zu den Polymeren der Gruppe a) komplementär sein, so daß hier ein 2-komponenten-Reaktivsystem latent vorhanden sind. Die reaktiven Gruppen der Polymere der Gruppen b) können dabei ausgewählt werden aus Isocyanatgruppen, Epoxidgruppen und/oder aktiven olefinisch ungesättigten Doppelbindungen

Konkrete Beispiele für die Polymeren der Gruppe a) sind Polybutadiene oder Polyisoprene mit überwiegend entständigen OH-Gruppen, Aminogruppen, Carboxylgruppen, Carbonsäureanhydridgruppen oder Mercaptogruppen, die ggf. ganz oder teilweise hydriert sein können.
Als reaktives Polymer und/oder Oligomer für die Komponente b) kann ein Isocyanat-terminiertes Polybutadien eingesetzt werden, erhältlich beispielsweise durch die Umsetzung von OH-gruppenhaltigen Polybutadien mit einem Diisocyanat wie z.B. Diphenylmethandiisocyanat (MDI), Toluylendiisocyanat (TDI) oder ähnlichen aus der Polyurethanchemie wohlbekannten Di- oder Polyisocyanaten. Im einfachsten Fall kann die Komponente b) auch das Homologengemisch der mehrkemigen MDI-Homologen vom Typ des sogenannten "Roh-MDI" Verwendung finden. Eine Isocyanatgruppen-haltige Komponente b) wird dabei in bevorzugter Weise natürlich mit einer Hydroxylgruppen-haltigen oder Aminogruppen-haltigen oder auch Mercaptogruppen-haltigen Komponente a) kombiniert.

Als epoxidgruppenhaltige Komponente b) bieten sich im einfachsten Fall die Glycidylether von Polyphenolen an, daß heißt die Glycidylether des Bisphenols A oder der Novolake. Es können aber auch höher molekulare Epoxidharze durch Umsetzung von Diglycidylethem des Bisphenols A beispielsweise mit Isocyanatgruppen-haltigen Prepolymeren Verwendung finden. Eine Epoxidgruppen-haltige Komponente b) wird vorzugsweise mit einer Aminogruppen-haltigen, Carboxylgruppen-haltigen, Carbonsäureanhydridgruppen-haltigen oder Mercaptogruppen-haltigen Komponente a) kombiniert. Eine andere Möglichkeit ist die Kombination von hochreaktiven acrylatischen oder methacrylatischen Polymeren der Gruppe b) mit Mercaptogruppen-haltigen Polymeren der Gruppe a) (sogenannte "Thiol-En"-Reaktion). Die (Meth)acrylatischen Polymeren der b)-Gruppe können jedoch auch mit aminogruppen-haltigen Polymerteilchen a) kombiniert werden, die dann bei der Vernetzung eine Michael-Additions-Reaktion eingehen.

Die in den thermoplastischen reaktiven Granulat-Teilchen mit zu verwendenden Katalysatoren richten sich nach dem ausgewählten Reaktivsystem und sind dem Fachmann im Prinzip bekannt. Beispielhaft erwähnt seien hier Polyurethankatalysatoren aus der Gruppe der Metall-organischen Verbindungen des Zinns, Eisens, Titans, Wismuts, aliphatische tertiäre Amine sowie insbesondere cyclische aliphatische Amine. Als Epoxidkatalysatoren seien hier beispielhaft erwähnt: tertiäre Amine, Lewis-Säuren oder deren Salze bzw. Komplexverbindungen mit organischen Aminen. Weiterhin können katalytisch wirksame tertiäre Alkylamine wie z.B. Tris-(dimethylamino)-Phenol, Piperidin, Piperidinderivate, Hamstoffderivate oder Imidazolderivate als Katalysator für die Epoxide eingesetzt werden. Die Katalysatoren können entweder der nicht reaktiven Komponente c) zugefügt werden oder einer der Komponenten a) oder b). Beispielsweise kann man die Polyurethankatalysatoren der Komponente a) zufügen, die Hydroxylgruppen-, Aminogruppen-, oder Mercaptogruppen-haltige Polymere enthält.

Die einzelnen Komponenten a), b) und/oder c) werden durch Homogenisieren der Mischkomponenten in einem Kneter, Innenmischer oder ähnlichem Mischaggregat zunächst hergestellt und dann in einem Extruder durch eine entsprechende Vorrichtung - beispielsweise eine Lochscheiben-Düse - extrudiert und anschließend in Granulatteilchen zerteilt. Nach der Oberflächenbeschichtung dieser Granulatteilchen mit den vorgenannten Trennmitteln werden die Einzelkomponenten a), b) und c) in den erforderlichen Mengenverhältnissen in das Lager- bzw. Transportgebinde abgefüllt. Es kann notwendig sein, beispielsweise bei Isocyanatgruppen-haltigen Komponenten, die Gebinde nach dem Abfüllen feuchtigkeitsdicht zu verschließen. Als Gebinde kann man hier auf eine große Auswahl zurückgreifen, es können die herkömmlichen 200 I-Fässer sein, es können auch großvolumige Schüttkontainer sein oder großvolumige flexible Behältnisse vom Typ des sogenannten "Big-Bag". Wesentlich für die geeigneten Lager- bzw. Transportgebinde ist nur, daß sie, falls notwendig, feuchtigkeitsdicht verschließbar sind und daß sie die Entnahme der rieselfähigen Granulate entweder durch Schwerkraft oder beispielsweise durch pneumatische Fördereinrichtungen ermöglichen.

Beim Endanwender können die erfindungsgemäßen Gemenge dann problemlos dem Vorratsbehälter entnommen werden, da diese frei fließen bzw. rieselfähig sind und so auf einfache Weise dem Mischaggregat zugeführt werden können.

Dosierungsprobleme entfallen hierbei, da die reaktiven Gemengeteilchen a) und b) bereits beim Hersteller in dem richtigen Mischungsverhältnis vermengt wurden. Das Mischaggregat muss eine hohe Scherung aufweisen, da in diesem Mischaggregat, ggf. unter Erwärmung, die Granulatteilchen zerschlagen werden und hieraus eine homogene Masse entsteht, so daß die beiden Reaktivkomponenten a) und b) miteinander vermischt werden. Im Anschluß an diese Homogenisierung der thermoplastischen Schmelze wird diese ggf. durch eine formgebende Düse auf mindestens einen Randbereich eines Flächengebildes, wie z.B. einer Glasplatte aufgebracht. Anschließend wird das zweite Flächengebilde passgenau auf die Oberfläche des extrudierten reaktiven thermoplastischen Materials positioniert. Daran anschließend werden die beiden Flächengebilde ggf. verpresst und anschließend abkühlen gelassen, der Randverbund hat dann sofort eine ausreichende Anfangsfestigkeit für die weiteren Fertigungsprozesse.

Die Erwärmung der Mischung kann dabei entweder durch externe Heizaggregate erfolgen oder durch die eingebrachte Energie der scherenden Durchmischung.

Konkrete Beispiele für derartige geeignete Mischaggregate mit hoher Scherung sind Ein- und Mehrschneckenextruder, Kneter mit Austragschnecke und ggf. vorgeschaltetem Statikmischer, (Co-) Kneter, Mehrkammermischer oder Mischaggregate, wie sie zur Herstellung von BMC-Produkten (Bulk-Molding-Compound) oder speziellen DMC-Produkten (Dough-Molding-Compound) verwendet werden oder sogenannte Kontema-Mischaggregate (Firma Ika).

Prinzipiell können die erfindungsgemäßen Granulat-Mischungen jedoch auch aus Kleinapplikatoren eingewendet werden, z.B. aus konventionellen Kartuschen. Dazu müssen diese Kartuschen ggf. erwärmt werden und der Kolben durch Pressluft, hydraulisch oder mechanische Vortriebe bewegt werden, um das aufgeschmolzene Granulat aus der Kartuschenöffnung herauszudrücken. Als Mischaggregat mit hoher Scherung kann einer derartigen Kartusche ein an sich bekannter Statik-Mischer vorgeschaltet werden, es können auch statisch dynamische Mischsysteme verwendet werden wie sie z.B. in der WO 95/24556 offenbart werden. Weiterhin können statisch-dynamische Mischsysteme verwendet werden, wie sie in der EP-A-313519, der EP-A-351358 oder der DE-U-8717424 offenbart werden.

Die erfindungsgemäßen reaktiven Gemenge aus thermoplastischen Polymerteilchen werden vorzugsweise zur Herstellung von Isolierglas verwendet, sie können auch zur Herstellung von Solarkollektoren oder Solarelementen dienen. Ein weiteres Einsatzgebiet ist die Herstellung von Fassadenelementen aus Glas und glasähnlichen plattenförmigen Bauteilen, die im Randbereich miteinander kraftschlüssig/elastisch verbunden werden müssen. Weiterhin können die erfindungsgemäßen Zusammensetzungen zur Herstellung von Gießharzscheiben und zur Randabdichtung von Verbundglas benutzt werden.

Anhand der nachfolgenden Ausführungsbeispiele soll die Erfindung näher erläutert werden, wobei die Auswahl der Beispiele keine Beschränkung des Umfanges des Erfindungsgegenstandes darstellt. Sofern nicht anders angegeben, sind alle Mengenangaben in den nachfolgenden Beispielen Gew.% bzw. Gewichtsteile bezogen auf die gesamte Zusammensetzung.

### Beispiele

Bei den nachfolgend aufgeführten Beispielen wurden die Rezepturbestandteile in einem Laborkneter unter Feuchtigkeitsausschluß im Vakuum bis zur Homogenität durchmischt.

Zur Überprüfung der Lagerstabilität wurde ein Teil dieser Mischung in feuchtigkeitsdichte Dosen abgefüllt und diese verschlossen. Auch nach mehrwöchiger Lagerung im verschlossenen Gebinde hatte das Material seine Reaktivität und Vernetzungsfähigkeit behalten.

Zur Überprüfung auf die Durchhärtungseigenschaften wurde ein Teil zu Scheiben von 50 mm Durchmesser und 10 mm Dicke verpresst und der Härtungsfortschritt durch Penetrationsmessung nach der Konus-Penetrations-Methode gemäß ASTM D 217 gemessen. Der Konuswinkel betrug 30°, das Gewicht 150 Gramm und die Eindringzeit 6 Sekunden. Dabei wurde die Penetration einmal sofort gemessen zum anderen nach mehrtägiger Lagerung im Normklima (in Anlehnung an die DIN 50014) sowie bei erhöhter Temperatur. Ersteres diente zur Bestimmung des Härtungsfortschritts bei Umgebungsbedingungen, letzteres der beschleunigten Aushärtung.

Zur Bestimmung der Zugfestigkeitseigenschaften wurde ein weiterer Teil des Materials zu 13 bis 14 mm starken Platten gepresst und in 1 cm Breite und 5 cm lange Streifen geschnitten. Derartige Streifen wurden zentrisch auf eine Glasplatte (Abmessungen 5 x 5 cm) gelegt, anschließend wurde eine zweite Glasplatte auf den Kleb-/Dichtstoffstreifen so positioniert, daß die beiden Glasplatten zur Deckung gebracht wurden. Unter Zuhilfenahme von Abstandshaltem wurden die beiden Glasplatten auf einen Abstand von 12,5 mm gepresst, so daß der Kleb-/Dichtstoffstreifen beide Glasplatten vollständig benetzte und eine Dimension von 12,5 x 10 x 50 mm hatte. Die Zugfestigkeit wurde dann in einer Laborzugmaschine vom Typ Instron nach eintägiger Lagerung der Prüfkörper bei 80°C bzw. mehrtägiger Lagerung bei 80° bestimmt.

**Tabelle**

| **Beispiel** | **1** | **3** | **4** | **5** | **6** |
|---|---|---|---|---|---|
| Polyisobutylen ¹⁾ | 145 | 145 | 145 | 145 | 167 |
| Polyethylenwachs ²⁾ | 5 | 5 | 5 | 5 | 5,8 |
| Kreide ³⁾ | 90 | 90 | 90 | 90 | 103,7 |
| Ruß ⁴⁾ | 100 | 100 | 100 | 100 | 115,2 |
| Polybuten/-isobuten ⁵⁾ | 10 | 10 | 10 | 10 | 11,5 |
| Molsieb 3A (pulverförmig) | 65 | 65 | 65 | 65 | 74,9 |
| SEBS-Polymer ⁶⁾ | | | 100 | 100 | |
| ES-Polymer ⁷⁾ | | | | 20 | |
| Maleinisiertes Polybutadien ⁸⁾ | 137,4 | 68,7 | | | |
| OH-funtionelles Polybutadien ⁹⁾ | 56 | 28 | | | |
| NCO-funktionelles Polybutadien ¹⁰⁾ | | | 100 | 100 | 115,2 |
| silanfuntionelles Polyisobutylen ¹¹⁾ | | | | | |
| Polyether Weichmacher | | 6 | | | |
| Glymo ¹²⁾ | | | 5 | 5 | 5,76 |
| Kalium-octoat | | 2 | | | |
| DBTL ¹³⁾ | | | 1 | 1 | 1,15 |
| Dibutylzinn-Acetylacetonat | | | | | |
| | | | | | |
| Penetration ¹⁴⁾(sofort): | 93 | 12 | 19 | 26 | |
| Penetration (x Tage NK) ¹⁵⁾ | 34d-10 | 14d-5 | 15d-12 | 12d-17 | |
| Penetration (x Tage 80°): | 34d-1 | 14d-2 | 15d-5 | 12d-6 | |
| Shore A (Endwert nach Aushärtg.) | 80 | 77 | | | |
| Zugwert (1 Tag 80°) [MPa] | | | 0,5 | 0.7 | 1.2 |
| Zugwert (x Tage 80°) [MPa] | | | 15d/1,5 | 14d/1,5 | 14d/1,4 |

| | | | | | |
|---|---|---|---|---|---|
| Anmerkungen zur Tabelle 1.) Polyisobutylen, Molgewicht ca. 85000, Penetration 80 (DIN-1995/43), T_{g}-64°C 2.) Ethylenhomopolymer, Tropfpunkt 106°C (ASTM D 3954), Viskosität Brookfield 350 mPa.s (140°C) 3.) Gefällt, mittlerer Teilchendurchmesser 0.07 µm, BET-Oberliäche 31.6 m²/g, Ölzahl 55 4.) Printex U, Fa. Degussa-Hüls 5.) MG ca 5900, Viskosität 40500 cSt/100 (ASTMD-445) 6.) 13% Styrol-Anteil, 30% Diblock-Anteil, ca 1% Säureanhydrid-funktion 7.) Ethylen-butylen-Copolymer mit terminaler OH-Gruppe (monofunktionell) 8.) Maleinsäureanhydrid-Addukt an 1,4-cis-Polybutadien, Molekulargewicht ca. 2100, Säurezahl ca. 88 mg KOH/g 9.) OH-Zahl 46.6, Molgewicht ca 2800, 60% trans 1,4-Doppelbindungen, 20% cis 1,4-, 20% vinyl 1,2-Doppelbindungen 10) Umsetzungsprodukt aus TDI und einem OH-funktionellen Polybutadien, Molgewicht ca. 3500, 3,1% NCO-Gehalt 12) Glycidyl-oxypropryltriethoxysilan 13) Dibutylzinndilaurat 14) gemäß ASTM D 217 15) NK = Normklima | | | | | |

Das eingesetzte Molekularsieb hatte einen Wassergehalt von etwa 3%.

### Beispiel 7

Analog zu den Beispielen 1 bis 6 wurde Gemengeteilchen für die Komponente a) und Komponente b) separat in einem Kneter hergestellt:

| Komponente a) | |
|---|---|
| Polyisobutylen ¹⁾ | 145 Teile |
| OH-funktionelles Polybutadien²⁾ | 100 Teile |
| Kreide ³⁾ | 90 Teile |
| Ruß (Printex, U)⁴⁾ | 100 Teile |
| Molekularsieb 3A (Pulver) | 65 Teile |
| DBTL ⁵⁾ | 2 Teile |

| Komponente b) | |
|---|---|
| Polyisobutylen ¹⁾ | 145 Teile |
| NCO-terminiertes Polybutadien ⁶⁾ | 100 Teile |
| Kreide ³⁾ | 90 Teile |
| Ruß (Printex U) ⁴⁾ | 100 Teile |
| Molekularsieb 3 A (Pulver) | 65 Teile |

### Beispiele 8

| Komponente a) | |
|---|---|
| Polyisobutylen ¹⁾ | 145 Teile |
| OH-funktionelles Polybutadien ²⁾ | 56 Teile |
| Kreide ³⁾ | 90 Teile |
| Ruß (Printex U) ⁴⁾ | 100 Teile |
| Molekularsieb 3 A (Pulver) | 65 Teile |

| Komponente b) | |
|---|---|
| Polyisobutylen ¹⁾ | 145 Teile |
| Maleinisiertes Polybutadien ⁷⁾ | 137 Teile |
| Kreide ³⁾ | 90 Teile |
| Ruß (Printex U) ⁴⁾ | 100 Teile |
| Molekularsieb 3 A (Pulver) | 65 Teile |

| | |
|---|---|
| 1.) Polyisobutylen, Molgewicht ca. 85000, Penetration 80 (DIN-1995/43), T_{g}-64°C 2.) OH-Zahl 46.6, Molgewicht ca. 2800, 60 % trans 1,4-Doppelbindungen, 20% cis 1,4-, 20% vinyl 1,2-Doppelbindungen 3.) Gefällt, mittlerer Teilchendurchmesser 0.07 mm, BET-Oberfläche 31.6 m²/g, Ölzahl 55 4.) Fa. Degussa-Hüls 5.) Dibutylzinndilaurat 6.) Umsetzungsprodukt aus TDI und einem OH-funktionellen Polybutadien, Molgewicht ca. 3500, 3,1% NCO-Gehalt 7.) Maleinsäureanhydrid-Addukt an 1,4-cis-Polybutadien, Molekulargewicht ca. 2100, Säurezahl ca. 88 mg KOH/g | |

Aus den in den Beispielen 7 und 8 hergestellten Komponenten a) bzw. b) wurden durch Extrusion von Materialsträngen mit 8 mm Durchmesser und Zerschneiden dieser Stränge in 8 mm lange Stücke Granulate hergestellt, die unmittelbar anschließend in feuchtigkeitsdicht schließende Dosen verpackt wurden. Auch nach mehrwöchiger Lagerung wiesen diese Granulate noch die ursprüngliche Reaktivität auf.

Zur weiteren Verarbeitung werden gleiche Teile der Komponenten a) und b) homogenisiert und in die entsprechende Form extrudiert. Nach dem kompletten Aushärten des Materials können die physikalischen und mechanischen Daten bestimmt werden. Die erzielbaren Festigkeitswerte stimmen weitgehend mit denen überein, die in den Beispielen 1 bis 6 erzielt wurden.

## Patentansprüche

1. Reaktives Gemenge aus thermoplastischen Polymerteilchen auf Basis von Butylkautschuk, elastomeren Blockcopolymeren, Poly-α-olefinen und/oder Polyisobutylenen, **dadurch gekennzeichnet, daß**
a) ein Anteil dieser Gemengeteilchen Polymere mit reaktiven Gruppen ausgewählt aus Hydroxylgruppen, Aminogruppen, Carboxylgruppen, Carbonsäureanhydridgruppen und/oder Mercaptogruppen enthält
b) ein weiterer Anteil der Gemengeteilchen Polymere mit reaktiven Gruppen ausgewählt aus Isocyanatgruppen, Epoxidgruppen und/oder aktiven olefinisch ungesättigten Doppelbindungen enthält sowie
c) ggf. ein weiterer Anteil der Gemengeteilchen nicht mit den funktionellen Polymeren der a) und b) Teilchen reagierende Hilfs- und Zusatzstoffe enthält.

2. Reaktives Gemenge nach Anspruch 1, **dadurch gekennzeichnet, daß** die reaktiven Bestandteile der Gemengeanteile a) und b) in angenähert stöchiometrischen Mengenverhältnissen vorliegen.

3. Reaktives Gemenge nach Anspruch 1 oder 2, **dadurch gekennzeichnet, daß** die Hilfs- und Zusatzstoffe ausgewählt werden aus Katalysatoren, Trockenmitteln, Rheologiehilfsmittel, Alterungsschutzmitteln und/oder Farbstoffen und Pigmenten.

4. Reaktives Gemenge nach mindestens einem der vorliegenden Ansprüche, **dadurch gekennzeichnet, daß** die Gemengeteilchen der Anteile a), b) und ggf. c) Granulate mit mittleren Teilchengrößen von 0,5 bis 40 mm, vorzugsweise 1 bis 30 mm und besonders bevorzugt 2 bis 20 mm sind.

5. Reaktives Gemenge nach Anspruch 4, **dadurch gekennzeichnet, daß** die Teilchenoberfläche der Granulatteilchen mit klebrigkeitsvermindernden und/oder feuchtigkeitsbindenden Agentien behandelt wurde.

6. Reaktives Gemisch nach Anspruch 5, **dadurch gekennzeichnet, daß** die klebrigkeitsvermindernden Agentien ausgewählt werden aus feinteiligen Stäuben in der Form von Ruß, hochdisperser Kieselsäure, Polyethylenpulver oder Talkum oder aus aufsprühbaren oder in fester Form aufstäubbaren, niedrig schmelzenden Flüssigkeiten wie Wachsen oder Paraffinen bestehen.

7. Verfahren zum Verbinden von flächigen Gebilden, **gekennzeichnet durch** die folgenden wesentlichen Verfahrensschritte
a) Homogenisieren und Aufschmelzen des reaktiven Gemenges nach mindestens einem der Ansprüche 1 bis 6 ggf. in einer inerten Atmosphäre unter Ausschluß von Feuchtigkeit und/oder Sauerstoff unter Verwendung eines ggf. heizbaren Mischaggregates mit hoher Scherung
b) Extrusion des homogenisierten reaktiven thermoplastischen Gemisches ggf. **durch** eine formgebende Düse auf mindestens einen Randbereich eines Flächengebildes
c) Fügen eines zweiten dazu passenden Flächengebildes auf die aufgebrachte Schicht des reaktiven Gemisches
d) ggf. mechanisches Fixieren der gefügten Flächengebilde
e) Abkühlen des so gebildeten Verbundsystems auf Raumtemperatur, wobei das reaktive Gemisch unter Vernetzung aushärtet.

8. Herstellung von 2- oder Mehrscheiben-Isoliergläsem, Gießharzscheiben, Solarkollektoren, Fassadenelementen für Bauwerke nach einem Verfahren gemäß Anspruch 7.

## Claims

1. Reactive blend of thermoplastic polymer particles based on butyl rubber, elastomeric block copolymers, poly-α-olefins and/or polyisobutylenes, **characterized in that**
a) a proportion of these blend particles comprises polymers having reactive groups selected from hydroxy groups, amino groups, carboxy groups, carboxylic anhydride groups and/or mercapto groups
b) another proportion of the blend particles comprises polymers having reactive groups selected from isocyanate groups, epoxide groups and/or active olefinically unsaturated double bonds and
c) optionally another proportion of the blend particles comprises auxiliaries and additives which do not react with the functional polymers of the a) and b) particles.

2. Reactive blend according to Claim 1, **characterized in that** the reactive constituents of parts a) and b) of the blend are present in approximately stoichiometric quantitative proportions.

3. Reactive blend according to Claim 1 or 2, **characterized in that** the auxiliaries and additives are selected from catalysts, drying agents, rheological aids, antioxidants and/or dyes and pigments.

4. Reactive blend according to at least one of the preceding claims, **characterized in that** the particles of parts a), b) and optionally c) of the blend are granules with average particle sizes of from 0.5 to 40 mm, preferably from 1 to 30 mm and particularly preferably from 2 to 20 mm.

5. Reactive blend according to Claim 4, **characterized in that** the surface of the granules has been treated with tack-reducing and/or moisture-binding agents.

6. Reactive blend according to Claim 5, **characterized in that** the tack-reducing agents are selected from fine-particle dusts in the form of carbon black, fine-particle silica, polyethylene powder or talc or are composed of low-melting liquids which can be applied by spraying or, in solid form, by dusting, e.g. waxes or paraffins.

7. Process for connecting flat products, **characterized by** the following substantial steps
a) homogenizing and melting the reactive blend according to at least one of Claims 1 to 6 optionally in an inert atmosphere with no moisture and/or oxygen, using a high-shear, optionally heatable mixing unit
b) extruding the homogenized reactive thermoplastic mixture optionally through a shaping die onto at least one edge region of a flat product
c) joining a second flat product that fits therewith onto the applied layer of the reactive mixture
d) optionally mechanically fixing the joined flat products
e) cooling the composite system thus formed to room temperature, with crosslinking and hardening of the reactive mixture.

8. Production of insulating glass having 2 or more panes, of casting-resin sheets, of solar collectors, of façade elements for buildings by a process according to Claim 7.

## Revendications

1. Mélange réactif de particules polymères thermoplastiques à base de caoutchouc butyle, de copolymères séquencés élastomériques, de poly-α-oléfines et/ou de polyisobutylènes, **caractérisé en ce que**
a) une fraction de ces particules de mélange contient des polymères présentant des groupes réactifs choisis parmi les groupes hydroxyle, les groupes amino, les groupes carboxyle, les groupes anhydride d'acide carboxylique et/ou les groupes mercapto,
b) une autre fraction des particules de mélange contient des polymères présentant des groupes réactifs choisis parmi les groupes isocyanate, les groupes époxyde et/ou les doubles liaisons insaturées oléfiniquement actives, et
c) le cas échéant une autre fraction des particules de mélange contient des particules a) et b).

2. Mélange réactif selon la revendication 1, **caractérisé en ce que** les constituants réactifs des fractions a) et b) du mélange se présentent dans des rapports quantitatifs approximativement stoechiométriques.

3. Mélange réactif selon la revendication 1 ou 2, **caractérisé en ce que** les adjuvants et additifs sont choisis parmi les catalyseurs, les agents dessicateurs, les adjuvants de rhéologie, les agents de protection contre le vieillissement et/ou les colorants et les pigments.

4. Mélange réactif selon au moins une des revendications précédentes, **caractérisé en ce que** les particules de mélange des fractions a), b) et le cas échéant c) sont des granulés ayant des tailles particulaires moyennes de 0,5 à 40 mm, de préférence de 1 à 30 mm et de façon particulièrement préférée de 2 à 20 mm.

5. Mélange réactif selon la revendication 4, **caractérisé en ce que** la surface des particules de granulé a été traitée avec des agents diminuant l'adhérence et/ou liant l'humidité.

6. Mélange réactif selon la revendication 5, **caractérisé en ce que** les agents diminuant l'adhérence sont choisis parmi les poussières fines sous forme de noir de fumée, d'acide silicique finement dispersé, de poudre de polyéthylène ou de talc ou parmi les liquides à bas point de fusion pulvérisables ou poudrables sous forme solide, comme les cires ou les paraffines.

7. Procédé pour lier les produits plats, **caractérisé par** les étapes opératoires essentielles suivantes :
a) homogénéisation et fusion du mélange réactif selon au moins une des revendications 1 à 6, le cas échéant dans une atmosphère inerte à l'exclusion de l'humidité et/ou de l'oxygène en utilisant un appareil de mélange éventuellement chauffable à fort cisaillement,
b) extrusion du mélange thermoplastique réactif homogénéisé, le cas échéant à travers une buse de formage, sur au moins une zone marginale d'un produit plat,
c) ajout d'un second produit plat qui s'y adapte sur la couche de mélange réactif apportée,
d) le cas échéant, fixation mécanique des produits plats ajoutés,
e) refroidissement du système composite ainsi formé à la température ambiante, le mélange réactif durcissant en se réticulant.

8. Production de verres isolants à 2 ou plusieurs couches, de lames de résine coulées, de capteurs solaires, d'éléments de façade pour bâtiments selon un procédé de la revendication 7.
